# EUROPÄISCHE PATENTSCHRIFT

(11) **EP 1 012 213 B1**
(45) Veröffentlichungstag und Bekanntmachung des Hinweises auf die Patenterteilung: **21.11.2001**
(21) Anmeldenummer: 98948837.4
(22) Anmeldetag: 17.08.1998
(51) Int. Cl.: C09D 183/14, C09D 4/00, C09D 183/06

(54) **BESCHICHTUNGSZUSAMMENSETZUNGEN AUF DER BASIS VON EPOXIDGRUPPEN ENTHALTENDEN SILANEN**
COATING COMPOSITIONS WITH A BASE CONSISTING OF SILANES CONTAINING EPOXIDE GROUPS
COMPOSITIONS DE RECOUVREMENT A BASE DE SILANES CONTENANT DES GROUPES EPOXYDE

(30) Priorität: 27.08.1997 DE 19737328
(43) Veröffentlichungstag der Anmeldung: 28.06.2000
(73) Patentinhaber: BAYER AG, 51368 Leverkusen (DE)
(72) Erfinder: BIER, Peter, D-47800 Krefeld (DE); GENZ, Joachim, D-47918 Tönisvorst (DE)
(86) Internationale Anmeldenummer: EP9805197
(87) Internationale Veröffentlichungsnummer: WO9910441

(56) Entgegenhaltungen:
- EP-A- 0 358 011
- EP-A- 0 730 168
- WO-A-95/13326
- DE-A- 19 511 627
- GB-A- 2 137 648

## Beschreibung

Die vorliegende Erfindung betrifft Beschichtungszusammensetzungen auf der Basis von epoxidgruppenhaltigen hydrolysierbaren Silanen, die damit beschichteten Artikel und ihre Verwendung.

Mit Hilfe des Sol-Gel-Prozesses ist es möglich, aus Alkoxiden, z.B. Aluminium-propanolat oder -butanolat, unter Verwendung modifizierter Alkoxysilane Materialien herzustellen, die sich als Beschichtungen eignen. Diese Sol-Gel-Verfahren sind im wesentlichen dadurch gekennzeichnet, daß eine Mischung der Ausgangskomponenten durch ein Hydrolyse- und Kondensationsverfahren zu einer viskosen flüssigen Phase reagiert. Durch diese Synthesemethode bildet sich ein organisch modifiziertes anorganisches Grundgerüst, das im Vergleich zu üblichen organischen Polymeren eine erhöhte Oberflächenhärte aufweist. Ein entscheidender Nachteil ist jedoch, daß auf Grund der hohen Reaktivität der aluminiumhaltigen Komponente keine hohe Lagerstabilität (Topfzeit) erzielt werden kann. Im Vergleich zu anorganischen Materialien sind die erhaltenen Schichten immer noch relativ weich. Dies ist dadurch begründet, daß die anorganischen Anteile im System zwar stark vernetzend wirken, daß aber auf Grund ihrer sehr geringen Größe die mechanischen Eigenschaften, wie z.B. Härte und Abriebbeständigkeit, nicht zum Tragen kommen. Durch sogenannte gefüllte Polymere können die günstigen mechanischen Eigenschaften der anorganischen Anteile voll ausgenutzt werden, da hierbei Partikelgrößen von mehreren Mikrometern vorliegen. Allerdings geht dabei die Transparenz der Materialien verloren, und Anwendungen im Bereich der Optik sind nicht mehr möglich. Die Verwendung von kleinen Teilchen aus SiO₂ (z.B. Aerosile® ) zur Herstellung transparenter Schichten mit erhöhter Abriebfestigkeit ist zwar möglich, bei den einsetzbaren geringen Konzentrationen sind die erreichbaren Abriebfestigkeiten jedoch ähnlich denen der des oben genannten Systems. Die Obergrenze der Füllstoffmenge wird durch die hohe Oberflächenreaktivität der kleinen Teilchen bestimmt, die Agglomerationen bzw. nicht tolerierbare Viskositätserhöhungen zur Folge hat.

WO 95/13326 beschreibt ein Verfahren zur Herstellung eines organisch modifizierten anorganischen Systems, das eine im Vergleich zu den vorstehend beschriebenen Systemen deutlich erhöhte Härte aufweist und eine hohe optische Transparenz zeigt. Ebenfalls dort beschrieben werden zum Korrosionsschutz von Metalloberflächen geeignete organische modifizierte anorganische Systeme sowie entsprechende Systeme für hydrophile Beschichtungen. Die Zusammensetzungen werden nach einem Verfahren erhalten, welches die Zugabe eines teilchenförmigen Materials, das aus Oxiden, Oxidhydraten, Nitriden und Carbiden von Si, Al und B oder Übergangsmetallen ausgewählt wird und eine Teilchengröße im Bereich von 1 bis 100 nm aufweist, vorzugsweise Böhmit, und/oder eines vorzugsweise nicht-ionischen Tensids und/oder eines aromatischen Polyols zu mindestens einer vorhydrolysierten Siliciumverbindung mit einem eine Epoxidgruppe aufweisenden direkt an Si gebundenen Rest umfaßt. Durch Kombination der vorhydrolysierten Siliciumverbindung mit dem teilchenförmigen Material wird eine hohe Kratzfestigkeit erzielt. Durch Kombination der vorhydrolysierten Siliciumverbindung mit einem Tensid erhält man demgegenüber hydrophile Beschichtungen, während durch Kombination der vorhydrolysierten Siliciumverbindung mit einem aromatischen Polyol korrosionsinhibierende Beschichtungen erhalten werden können. Wahlweise können im Verfahren fluorierte Silane zur Herstellung hydrophober bzw. oleophober Beschichtungen, Lewis-Basen oder Alkoholate als Vernetzungskatalysatoren oder weitere hydrolysierbare Verbindungen zugesetzt werden.

In DE-40 20 316-A1 wird ein Lack auf der Basis von hydrolysierbaren Silanen beschrieben, der nach der Härtung zu abriebfesten und flexiblen Überzügen führt. Er ist dadurch erhältlich, daß man eine oder mehrere eine Epoxidgruppe aufweisende Siliciumverbindungen mit Wasser umsetzt, wobei das Molverhältnis von Wasser zu vorhandenen hydrolysierbaren Gruppen von 1:1 bis 0,4:1 beträgt. Zusätzlich zu den Siliciumverbindung können auch weitere hydrolysierbare Verbindungen, beispielsweise von Aluminium, Titan, Zirkonium, Vanadium, Zinn, Blei und Bor eingesetzt werden. Als Katalysatoren für die Härtung der Zusammensetzung sind besonders tertiäre Amine geeignet, die bei Temperaturen oberhalb von 60°C eine Vernetzung der Epoxygruppen bewirken.

DE-OS 30 21 018 offenbart eine Überzugsmasse, die ein teilweise hydrolysiertes Kondensationsprodukt aus Alkyltrialkoxysilanen, eine organische Carbonsäure und ein anionisches oberflächenaktives Fluorkohlenwasserstoffmittel enthält. Die verwendeten Silane enthalten keine Epoxygruppen. Die Zusammensetzung ergibt Oberflächenüberzüge mit einer abriebbeständigen Oberfläche sowie guter Transparenz, Wärmebeständigkeit und Adhäsion gegenüber dem Grundmaterial sowie Wasserbeständigkeit.

US-5 134 191 offenbart eine harte Überzugszusammensetzung, welche eine Epoxygruppen enthaltende organische Siliciumverbindung und anorganische Submikron-Partikel wie Silicasol enthält und mit einer minimalen Menge einer Antimon-Verbindung als Härtungskatalysator härtbar ist. Sie ist verwendbar als Überzugsfilm für optische Kunststoffartikel. Gegebenenfalls kann die Zusammensetzung auch eine Aluminiumverbindung enthalten.

Der vorliegenden Erfindung liegt die Aufgabe zugrunde, eine Zusammensetzung mit noch weiter verbesserter Kratzfestigkeit, Haftung, Lackviskosität und Elastizität bereitzustellen, die im Vergleich zu den Zusammensetzungen des Stands der Technik eine geringere Neigung zur Gelierung und Trübung aufweist.

Diese Aufgabe wird gelöst durch eine Beschichtungszusammensetzung, umfassend mindestens eine Siliciumverbindung (A), die mindestens einen hydrolytisch nicht abspaltbaren, direkt an Si gebundenen Rest aufweist, der eine Epoxidgruppe enthält, ein teilchenförmiges Material (B), das ausgewählt wird aus Oxiden, Oxidhydraten, Nitriden und Carbiden von Si, Al und B sowie von Übergangsmetallen und eine Teilchengröße im Bereich von 1 bis 100 nm aufweist, eine Verbindung (C) von Si, Ti, Zr, B, Sn oder V und mindestens eine hydrolysierbare Verbindung (D) von Ti, Zr oder Al, dadurch gekennzeichnet, daß sie folgendes Verhältnis
1 mol Siliciumverbindung (A),
0,42-0,68 mol teilchenförmiges Material (B),
0,28-1,0 mol Verbindung (C)
und 0,23-0,68 mol Verbindung (D)
umfaßt.

Die erfindungsgemäßen, durch bestimmte Mengenverhältnisse der eingesetzten Komponenten gekennzeichnete Zusammensetzungen ergeben hochkratzfeste Beschichtungen, die besonders gut am beschichteten Material haften und eine deutlich verlängerte Topfzeit aufweisen.

Zur Erzielung eines hydrophileren Charakters der erfindungsgemäßen Zusammensetzung kann zusätzlich eine Lewis-Base (E) als Katalysator verwendet werden.

Es kann zusätzlich eine hydrolysierbare Siliciumverbindung (F) mit mindestens einem nicht-hydrolysierbaren Rest eingesetzt werden, der 5 bis 30 direkt an Kohlenstoffatome gebundene Fluoratome aufweist, wobei diese Kohlenstoffatome durch mindestens 2 Atome von Si getrennt sind. Die Verwendung eines derartigen fluorierten Silans führt dazu, daß dem entsprechenden Überzug zusätzlich hydrophobe und schmutzabweisende Eigenschaften verliehen werden.

Zusätzlich kann ein vorzugsweise nicht-ionisches Tensid (G) zur Erzielung langzeithydrophiler Eigenschaften und/oder ein aromatisches Polyol (H) zur Erzielung korrosionsinhibierender Eigenschaften (Erhöhung der Kondenswasserbeständigkeit) eingesetzt werden.

Im folgenden werden die Verbindungen (A) bis (H) näher erläutert:

### Siliciumverbindung (A)

Bei der Siliciumverbindung (A) handelt es sich um eine Siliciumverbindung, die über 2 oder 3, vorzugsweise 3, hydrolysierbare Reste und einen oder 2, vorzugsweise einen, nicht-hydrolysierbaren Rest verfügt. Der einzige bzw. mindestens einer der beiden nicht-hydrolysierbaren Reste verfügt über eine Epoxidgruppe.

Beispiele für die hydrolysierbaren Reste sind Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und n-Butoxy, i-Butoxy, sec-Butoxy und tert-Butoxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Alkylcarbonyl (z.B. Acetyl). Besonders bevorzugte hydrolysierbare Reste sind Alkoxygruppen, insbesondere Methoxy und Ethoxy.

Beispiele für nicht-hydrolysierbare Reste ohne Epoxidgruppe sind Wasserstoff, Alkyl, insbesondere C₁₋₄-Alkyl (wie z.B. Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie z.B. Acetylenyl und Propargyl) und Aryl, insbesondere C₆₋₁₀-Aryl, wie z.B. Phenyl und Naphthyl), wobei die soeben genannten Gruppen gegebenenfalls einen oder mehrere Substituenten, wie z.B. Halogen und Alkoxy, aufweisen können. Auch Methacryl- und Methacryloxy-propylreste können in diesem Zusammenhang erwähnt werden.

Beispiele für nicht-hydrolysierbare Reste mit Epoxidgruppe sind insbesondere solche, die über eine Glycidyl- bzw. Glycidyloxygruppe verfügen.

Konkrete Beispiele fiir erfindungsgemäß einsetzbare Siliciumverbindungen (A) können z.B. den Seiten 8 und 9 der EP-A-195 493 entnommen werden, deren Offenbarung durch Bezugnahme in die vorliegende Anmeldung aufgenommen wird.

Erfindungsgemäß besonders bevorzugte Siliciumverbindungen (A) sind diejenigen der allgemeinen Formel

R₃SiR'

in welcher die Reste R gleich oder verschieden sind (vorzugsweise identisch) und für eine hydrolysierbare Gruppe (vorzugsweise C₁₋₄-Alkoxy und insbesondere Methoxy und Ethoxy) stehen und R' einen Glycidyl- oder Glycidyloxy-(C₁₋₂₀)-alkylen-Rest darstellt, insbesondere β-Glycidyloxyethyl-, γ-Glycidyloxypropyl, δ-Glycidyl-oxybutyl-, ε-Glycidyloxypentyl-, ω-Glycidyloxyhexyl-, ω-Glycidyloxyoctyl-, ω-Glycidyloxynonyl-, ω-Glycidyloxydecyl-, ω-Glycidyloxydodecyl- und 2-(3,4-Epoxycyclohexyl)-ethyl-.

Wegen seiner leichten Zugänglichkeit wird γ-Glycidyloxy-propyltrimethoxysilan (im folgenden als GPTS abgekürzt) erfindungsgemäß besonders bevorzugt eingesetzt.

### Teilchenförmiges Material (B)

Beim teilchenförmigen Material (B) handelt es sich um ein Oxid, Oxidhydrat, Nitrid oder Carbid von Si, Al und B sowie von Übergangsmetallen, vorzugsweise Ti, Zr und Ce, mit einer Teilchengröße im Bereich von 1 bis 100, vorzugsweise 2 bis 50 nm und besonders bevorzugt 5 bis 20 nm. Dieses Material kann in Form eines Pulvers eingesetzt werden, wird jedoch vorzugsweise in Form eines (insbesondere sauer stabilisierten) Sols verwendet. Bevorzugte teilchenförmige Materialien sind Böhmit, CeO₂, ZrO₂ und TiO₂ sowie Titannitrid. Besonders bevorzugt werden nanoskalige Böhmitteilchen. Die teilchenförmigen Materialien sind in Form von Pulvern im Handel erhältlich und die Herstellung von (sauer stabilisierten) Solen daraus ist ebenfalls im Stand der Technik bekannt. Außerdem kann hierzu auf die unten angegebenen Herstellungsbeispiele verwiesen werden. Das Prinzip der Stabilisierung von nanoskaligem Titannitrid mittels Guanidinpropionsäure ist z.B. in der deutschen Patentanmeldung P-43 34 639.1 beschrieben.

Besonders bevorzugt wird Böhmit-Sol mit einem pH im Bereich von 2,5 bis 3,5, bevorzugt 2,8 bis 3,2 eingesetzt, der beispielsweise durch Suspendieren von Böhmitpulver in verdünnter HCl erhalten werden kann.

Die Variation der nanoskaligen Teilchen geht in der Regel mit einer Variation des Brechwerts der entsprechenden Materialien einher. So führt z.B. der Ersatz von Böhmit-Teilchen durch ZrO₂- bzw. TiO₂-Teilchen zu Materialien mit höheren Brechwerten, wobei sich der Brechwert nach der Lorentz-Lorenz-Gleichung additiv aus dem Volumen der hochbrechenden Komponente und der Matrix ergibt.

### Hydrolysierbare Verbindungen (C)

Neben den Siliciumverbindungen (A) werden zur Herstellung der erfindungsgemäßen Zusammensetzungen auch andere hydrolysierbare Verbindungen von Elementen aus der Gruppe Si, Ti, Zr, Al, B, Sn und V herangezogen und vorzugsweise mit der bzw. den Siliciumverbindung(en) (A) hydrolysiert.

Bei der Verbindung (C) handelt es sich um eine Verbindung von Si, Ti, Zr, B, Sn und V der allgemeinen Formel

RₓM⁺⁴R'₄₋ₓ

oder

RₓM⁺³R'₃₋ₓ

wobei M a) Si⁺⁴, Ti⁺⁴, Zr⁺⁴, Sn⁺⁴, oder b) Al⁺³, B⁺³ oder (VO)⁺³ darstellt, R einen hydrolysierbaren Rest darstellt, R' einen nicht hydrolysierbaren Rest darstellt und x im Fall vierwertiger Metallatome M (Fall a)) 1 bis 4 und im Fall dreiwertiger Metallatome M (Fall b)) 1 bis 3 sein kann. Falls mehrere Reste R und/oder R' in einer Verbindung (C) anwesend sind, dann können diese jeweils gleich oder verschieden sein. Bevorzugt ist x größer als 1. D.h., die Verbindung (C) weist mindestens einen, bevorzugt mehrere, hydrolysierbare Reste auf.

Beispiele fiir die hydrolysierbaren Reste sind Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und n-Butoxy, i-Butoxy, sec-Butoxy oder tert-Butoxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Alkylcarbonyl (z.B. Acetyl). Besonders bevorzugte hydrolysierbare Reste sind Alkoxygruppen, insbesondere Methoxy und Ethoxy.

Beispiele für nicht-hydrolysierbare Reste sind Wasserstoff, Alkyl, insbesondere C₁₋₄-Alkyl (wie z.B. Methyl, Ethyl, Propyl und n-Butyl, i-Butyl, sec-Butyl und tert-Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie z.B. Acetylenyl und Propargyl) und Aryl, insbesondere C₆₋₁₀-Aryl, wie z.B. Phenyl und Naphthyl), wobei die soeben genannten Gruppen gegebenenfalls einen oder mehrere Substituenten, wie z.B. Halogen und Alkoxy, aufweisen können. Auch Methacryl- und Methacryloxypropylreste können in diesem Zusammenhang erwähnt werden.

Konkrete Beispiele für Verbindungen (C), die eingesetzt werden können, sind im folgenden angegeben, wobei diese jedoch keine Beschränkung der einsetzbaren Verbindungen (C) darstellen sollen.
Si(OCH₃)₄, Si(OC₂H₅)₄, Si(O-n- oder i-C₃H₇)₄,
Si(OC₄H₉)₄, SiCl₄, HSiCl₃, Si(OOCCH₃)₄,
CH₃-SiCl₃, CH₃-Si(OC₂H₅)₃, C₂H₅-SiCl₃, C₂H₅-Si(OC₂H₅)₃,
C₃H₇-Si(OCH₃)₃, C₆H₅-Si(OCH₃)₃, C₆H₅-Si(OC₂H₅)₃,
(CH₃O)₃-Si-C₃H₆-Cl,
(CH₃)₂SiCl₂, (CH₃)₂Si(OCH₃)₂, (CH₃)₂Si(OC₂H₅)₂,
(CH₃)₂Si(OH)₂, (C₆H₅)₂SiCl₂, (C₆H₅)₂Si(OCH₃)₂,
(C₆H₅)₂Si(OC₂H₅)₂, (i-C₃H₇)₃SiOH,
CH₂=CH-Si(OOCCH₃)₃,
CH₂=CH-SiCl₃, CH₂=CH-Si(OCH₃)₃, CH₂=CH-Si(OC₂H₅)₃,
CH₂=CH-Si(OC₂H₄OCH₃)₃, CH₂=CH-CH₂-Si(OCH₃)₃,
CH₂=CH-CH₂-Si(OC₂H₅)₃,
CH₂=CH-CH₂-Si(OOCCH₃)₃,
CH₂=C(CH₃)-COO-C₃H₇-Si(OCH₃)₃,
CH₂=C(CH₃)-COO-C₃H₇-Si(OC₂H₅)₃,

Al(OCH₃)₃, Al(OC₂H₅)₃, Al(O-n-C₃H₇)₃,
Al(O-i-C₃H₇)₃, Al(OC₄H₉)₃, Al(O-i-C₄H₉)₃,
Al(O-sek-C₄H₉)₃, AlCl₃, AlCl(OH)₂, Al(OC₂H₄OC₄H₉)₃,

TiCl₄, Ti(OC₂H₅)₄, Ti(OC₃H₇)₄,
Ti(O-i-C₃H₇)₄, Ti(OC₄H₉)₄, Ti(2-ethylhexoxy)₄;

ZrCl₄, Zr(OC₂H₅)₄, Zr(OC₃H₇)₄, Zr(O-i-C₃H₇)₄, Zr(OC₄H₉)₄,
ZrOCl₂, Zr(2-ethylhexoxy)₄,
sowie Zr-Verbindungen, die komplexierende Reste aufweisen, wie z.B. β-Diketonund Methacryl-Reste,
BCl₃, B(OCH₃)₃, B(OC₂H₅)₃,
SnCl₄, Sn(OCH₃)₄,
Sn(OC₂H₅)₄,
VOCl₃, VO(OCH₃)₃.

Besonders bevorzugt werden Verbindungen SiR₄ eingesetzt, wobei die Reste R gleich oder verschieden sein können und für eine hydrolysierbare Gruppe stehen, bevorzugt für eine Alkoxygruppe mit 1 bis 4 Kohlenstoffatomen, insbesondere für Methoxy, Ethoxy, n-Propoxy, i-Propoxy, n-Butoxy, i-Butoxy, sec-Butoxy oder tert.-Butoxy.

Wie ersichtlich, können diese Verbindungen (C) (insbesondere die Siliciumverbindungen) auch über nicht-hydrolysierbare Reste verfügen, die eine C-C-Doppel- oder Dreifach-Bindung aufweisen. Werden derartige Verbindungen zusammen mit (oder sogar anstelle) den Siliciumverbindungen (A) eingesetzt, können in die Zusammensetzung zusätzlich auch (vorzugsweise Epoxy- oder Hydroxylgruppen-haltigc) Monomere, wie z.B. Meth(acrylate), einverleibt werden (selbstverständlich können diese Monomeren auch über zwei oder mehr funktionelle Gruppen desselben Typs verfügen, wie z.B. Poly(meth)acrylate von organischen Polyolen; ebenso ist die Verwendung von organischen Polyepoxiden möglich). Bei der thermischen oder photochemisch induzierten Härtung der entsprechenden Zusammensetzung findet dann zusätzlich zum Aufbau der organisch modifizierten anorganischen Matrix eine Polymerisation der organischen Spezies statt, wodurch die Vemetzungsdichte und somit auch die Härte der entsprechenden Überzüge und Formkörper zunimmt.

### Verbindung (D)

Die Verbindung (D) ist vorzugsweise eine Verbindung von Ti, Zr oder Al der folgenden allgemeinen Formel

M(R''')ₘ

worin M für Ti, Zr oder Al steht und die Reste R"' gleich oder verschieden sein können und für eine hydrolysierbare Gruppe stehen und n 4 (M = Ti, Zr) oder 3 (M = Al) ist.

Beispiele für die hydrolysierbaren Gruppen sind Halogen (F, Cl, Br und I, insbesondere Cl und Br), Alkoxy (insbesondere C₁₋₆-Alkoxy, wie z.B. Methoxy, Ethoxy, n-Propoxy, i-Propoxy und n-Butoxy, i-Butoxy, sec-Butoxy oder tert-Butoxy, n-Pentyloxy, n-Hexyloxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Alkylcarbonyl (z.B. Acetyl), oder eine C₁₋₆-Alkoxy-C₂₋₃-alkylgruppe, d.h. eine von C₁₋₆-Alkylethylenglykol oder -propylenglykol abgeleitete Gruppe, wobei Alkoxy dieselbe Bedeutung hat wie vorstehend erwähnt.

Besonders bevorzugt ist M Aluminium und R"' Ethanolat, sec-Butanolat, n-Propanolat oder n-Butoxyethanolat.

### Lewis-Base (E)

Bei der Lewis-Base (E) handelt es sich vorzugsweise um eine Stickstoffverbindung. Derartige Stickstoffverbindungen können z.B. ausgewählt werden aus N-Heterocyclen, Aminogruppen-haltigen Phenolen, polycyclischen Aminen und Ammoniak (vorzugsweise als wäßrige Lösung). Konkrete Beispiele hierfür sind 1-Methylimidazol, 2-(N,N-Dimethylaminomethyl)phenol, 2,4,6-Tris(N,N-dimethylaminomethyl)phenol und 1,8-Diazabicyclo[5.4.0]-7-undecen. Besonders bevorzugt unter diesen Verbindungen wird 1-Methylimidazol.

Eine weitere Klasse von stickstoffhaltigen Lewis-Basen, die erfindungsgemäß eingesetzt werden können, sind hydrolysierbare Silane, die über mindestens einen nicht-hydrolysierbaren Rest verfügen, der mindestens eine primäre, sekundäre oder tertiäre Aminogruppe umfaßt. Derartige Silane können zusammen mit der Siliciumverbindung (A) hydrolysiert werden und stellen dann eine in das organisch modifizierte anorganische Netzwerk eingebaute Lewis-Base dar. Bevorzugte Stickstoff-haltige Siliciumverbindungen sind solche der allgemeinen Formel

R₃SiR"

worin die Reste R Reste R gleich oder verschieden sind (vorzugsweise identisch) und für eine hydrolysierbare Gruppe (vorzugsweise C₁₋₄-Alkoxy und insbesondere Methoxy und Ethoxy) stehen, und R" für einen nicht-hydrolysierbaren, an Si gebundenen Rest steht, der mindestens eine primäre, sekundäre oder tertiäre Aminogruppe umfaßt. Konkrete Beispiele für derartige Silane sind 3-Aminopropyltrimethoxysilan, 3-Aminopropyltriethoxysilan, N-(2-Aminoethyl)-3-aminopropyltrimethoxysilan, N-[N'-(2'-Aminoethyl)-2-aminoethyl]3-aminopropyltrimethoxysilan und N-[3-(Triethoxysilyl)propyl]-4, 5-dihydroimidazol.

Die Lewis-Base wird in den entsprechenden Zusammensetzungen im allgemeinen in einer Menge von 0,01 bis 0,5 mol pro mol Epoxygruppe der Siliciumverbindung (A) eingesetzt. Bevorzugt sind Mengen im Bereich von 0,02 bis 0,3 und insbesondere 0,05 bis 0,1 mol Lewis-Base pro mol Epoxygruppe.

### Fluorhaltige Siliciumverbindung (F)

Die zusätzlich einsetzbaren hydrolysierbaren fluorierten Silane (F) sind solche, die über mindestens einen nicht-hydrolysierbaren Rest verfügen, der 5 bis 30 Fluoratome an Kohlenstoffatome gebunden aufweist, die durch mindestens zwei Atome von Si getrennt sind. Derartige Silane werden in der DE-OS 41 18 184 detailliert beschrieben. Konkrete Beispiele hierfür sind die folgenden:
C₂F₅CH₂-CH₂-SiY₃
n-C₆F₁₃CH₂CH₂-SiY₃
n-C₈F₁₇CH₂CH₂-SiY₃
n-C₁₀F₂₁CH₂CH₂-SiY₃
(Y = OCH₃, OC₂H₅ oder Cl)
i-C₃F₇O-(CH₂)₃-SiCl₂(CH₃)
n-C₆F₁₃CH₂CH₂SiCl₂(CH₃)
n-C₆F₁₃CH₂CH₂SiCl(CH₃)₂

Diese fluorierten Silane werden im allgemeinen in einer Menge von 0,1 bis 15, vorzugsweise 0,2 bis 10 und besonders bevorzugt 0,5 bis 5 Gew.-%, bezogen auf die Zusammensetzung, eingesetzt.

### Tensid (G)

Das Tensid (G), das zur Erzielung eines Langzeit-Antibeschlageffekts und zu einer höheren Hydrophilie der Beschichtungen eingesetzt werden kann, ist vorzugsweise ein nicht-ionisches Tensid. Besonders bevorzugt sind nicht-ionische Tenside, die bei Raumtemperatur in flüssiger Form vorliegen. Es besteht nicht nur die Möglichkeit, diese Tenside während der Herstellung der Zusammensetzungen nach dem erfindungsgemäßen Verfahren einzusetzen, sondern sie können auch (bevorzugt in wässeriger Lösung) bei ca. 50 bis 60°C nachträglich thermisch eindiffundiert werden. Bevorzugte Tenside sind Polyoxyethylenoleylether unterschiedlicher Kettenlänge (z.B. Brij® 92, 96 oder 98 der Fa. ICI), Polyoxyethylencetylether unterschiedlicher Kettenlänge (z.B. Malipal® 24/30 bis 24/100 der Fa. Hüls und Disponil® 05 der Fa. Henkel), Natriumlaurylsulfat (z.B. Sulfopon® 101 Spezial der Fa. Henkel), Laurylpyridiniumchlorid (z.B. Dehydquad C Christ® der Fa. Henkel) und Polyoxyethylensorbitanmonooleat (z.B. Tween® der Fa. Riedel de Haen).

Das Tensid wird im allgemeinen in Mengen von 0,1 bis 35 Gew.-%, bezogen auf die Beschichtungszusammensetzung, eingesetzt.

### Aromatisches Polyol (H)

Das erfindungsgemäß eingesetzte aromatische Polyol weist ein durchschnittliches Molekulargewicht von höchstens 1000 auf. Beispiele für solche Polyole sind z.B. Polyphenylenether, die an mindestens 2 der Phenylringe Hydroxygruppen tragen, sowie Oligomere, in denen aromatische Ringen durch eine Einfachbindung, -O-, -CO-, -SO₂- oder ähnliches aneinander gebunden sind und mindestens (und bevorzugt) 2 an aromatische Gruppen gebundene Hydroxygruppen aufweisen.

Besonders bevorzugte aromatische Polyole sind aromatische Diole. Unter diesen sind besonders bevorzugt Verbindungen mit den folgenden allgemeinen Formeln: 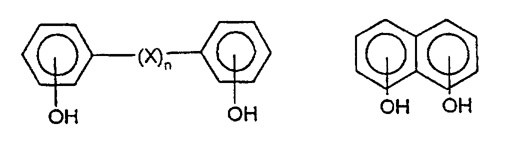 wobei X für einen (C₁-C₈)-Alkylen- oder -Alkylidenrest, einen (C₆-C₁₄)-Arylenrest, -O-, -S-, -CO- oder -SO₂- steht und n 0 oder 1 ist. Bevorzugt ist X C₁-C₄-Alkylen oder -Alkyliden, insbesondere -C(CH₃)₂- ,und -SO₂-. Die aromatischen Ringe der Verbindungen können neben den OH-Gruppen noch bis zu 3 bzw. 4 weitere Substituenten wie z.B. Halogen, Alkyl und Alkoxy tragen.

Konkrete Beispiele für erfindungsgemäß verwendbare aromatische Polyole (H) sind Bisphenol A, Bisphenol S und 1,5-Dihydroxynaphthalin, bevorzugt ist Bisphenol A.

Das Polyol (H) wird i.a. in solchen Mengen eingesetzt, daß pro mol Epoxidring der Siliciumverbindung (A) 0,2 bis 1,5 mol, bevorzugt 0,3 bis 1,2 und besonders bevorzugt 0,6 bis 1,0 mol Hydroxygruppen des aromatischen Polyols (H) anwesend sind.

Die Verwendung von Siliciumverbindungen (A), die über mindestens zwei Epoxidgruppen verfügen, in den erfindungsgemäßen Zusammensetzungen führt zu Beschichtungen und Formkörpern mit verbesserter Kondenswasserstabilität.

Bevorzugt werden die erfindungsgemäßen Zusammensetzungen durch ein nachstehend näher beschriebenes Verfahren erhalten, bei dem ein Sol des Materials (B) mit einem pH im Bereich von 2,5 bis 3,5, bevorzugt 2,8 bis 3,2, mit einem Gemisch der anderen Komponenten umgesetzt wird.

Noch weiter bevorzugt werden sie durch ein ebenfalls nachstehend definiertes Verfahren hergestellt, in dem das wie vorstehend definierte Sol in zwei Teilportionen zum Gemisch aus (A) und (C) gegeben wird, wobei bevorzugt bestimmte Temperaturen eingehalten werden, und wobei die Zugabe von (D) zwischen den beiden Portionen von (B) erfolgt, ebenfalls bevorzugt bei einer bestimmten Temperatur.

Für die erfindungsgemäße Zusammensetzung ist entscheidend, daß die Mengen der eingesetzten Komponenten in den definierten Bereichen liegen. Es hat sich gezeigt, daß unter dieser Voraussetzung Zusammensetzungen erhalten werden können, die deutlich verbesserte Kratzfestigkeit, Haftung, Lackviskosität, Gelierungszeiten, Trübung und Elastizität aufweisen.

Die hydrolysierbare Siliciumverbindung (A) kann gegebenenfalls gemeinsam mit der Verbindung (C) unter Verwendung eines sauren Katalysators (bevorzugt bei Raumtemperatur) in wässeriger Lösung vorhydrolysiert werden, wobei vorzugsweise etwa 1/2 Mol Wasser pro Mol hydrolysierbare Gruppe eingesetzt wird. Als Katalysator für die Vorhydrolyse wird bevorzugt Salzsäure eingesetzt.

Das teilchenförmige Material (B) wird bevorzugt in Wasser suspendiert und der pH auf 2,5 bis 3, bevorzugt auf 2,8 bis 3,2 eingestellt. Bevorzugt wird zum Ansäuern Salzsäure verwendet. Wenn als teilchenförmiges Material (B) Böhmit verwendet wird, bildet sich unter diesen Bedingungen ein klares Sol.

Die Verbindung (C) wird mit der Verbindung (A) gemischt. Anschließend wird die erste Teilportion des wie vorstehend beschrieben suspendierten teilchenförmigen Materials (B) zugegeben. Die Menge wird bevorzugt so gewählt, daß das darin enthaltene Wasser zur halbstöchiometrischen Hydrolyse der Verbindungen (A) und (C) ausreicht. Sie beträgt 10 bis 70 Gew.-% der Gesamtmenge, bevorzugt 20 bis 50 Gew.-%.

Die Reaktion verläuft leicht exotherm. Nach Abklingen der ersten exothermen Reaktion wird die Temperatur durch Temperieren auf ca. 28 bis 35°C, bevorzugt ca. 30 bis 32°C eingestellt, bis die Reaktion anspringt und eine Innentemperatur erreicht wird, die höher ist als 25°C, bevorzugt höher als 30°C und noch bevorzugter höher als 35°C. Nach Beendigung der Zugabe der ersten Portion des Materials (B) hält man die Temperatur noch während 0,5 bis 3 Stunden, bevorzugt 1,5 bis 2,5 Stunden und kühlt anschließend auf ca. 0°C ab. Das restliche Material (B) wird bevorzugt bei einer Temperatur von 0°C langsam zugegeben. Danach wird die Verbindung (D) sowie gegebenenfalls die Lewis-Base (E) ebenfalls bevorzugt nach der Zugabe der ersten Teilportion des Materials (B) bei ca. 0°C lagsam zugegeben. Anschließend wird die Temperatur vor Zugabe der zweiten Portion des Materials (B) während 0,5 bis 3 Stunden, bevorzugt während 1,5 bis 2,5 Stunden bei ca. 0°C gehalten. Danach wird das restliche Material (B) bei einer Temperatur von ca. 0°C langsam zugegeben. Die zugetropfte Lösung wird dabei bevorzugt unmittelbar vor der Zugabe in den Reaktor auf ca. 10°C vorgekühlt.

Nach der langsamen Zugabe der zweiten Teilportion der Verbindung (B) bei ca. 0°C wird bevorzugt die Kühlung entfernt, so daß das Aufwärmen des Reaktionsgemisches auf eine Temperatur von mehr als 15°C (bis Raumtemperatur) langsam ohne zusätzliche Temperierung erfolgt.

Alle Temperaturangaben schließen eine Abweichung von ±2°C ein. Unter Raumtemperatur wird eine Temperatur von 20 bis 23°C verstanden.

Zur Einstellung der rheologischen Eigenschaften der Zusammensetzungen können gegebenenfalls inerte Lösungsmittel auf einer beliebigen Stufe der Herstellung zugesetzt werden. Vorzugsweise handelt es sich bei diesen Lösungsmitteln um bei Raumtemperatur flüssige Alkohole, die im übrigen auch bei der Hydrolyse der bevorzugt eingesetzten Alkoxide entstehen. Besonders bevorzugte Alkohole sind C₁₋₈ Alkohole, insbesondere Methanol, Ethanol, n-Propanol, i-Propanol, n-Butanol, i-Butanol, tert.-Butanol, n-Pentanol, i-Pentanol, n-Hexanol, n-Octanol und n-Butoxyethanol. Ebenfalls bevorzugt sind C₁₋₆-Glylcolether, insbesondere n-Butoxyethanol.

Weiter können die erfindungsgemäßen Zusammensetzungen übliche Additive enthalten wie z.B. Farbstoffe, Verlaufmittel, UV-Stabilisatoren, Photoinitiatoren, Photosensibilisatoren (falls eine photochemische Härtung der Zusammensetzung beabsichtigt ist) und thermische Polymerisations-Katalysatoren.

Das Auftragen auf das Substrat erfolgt durch Standard-Beschichtungsverfahren wie z.B. Tauchen, Streichen, Bürsten, Rakeln, Walzen, Sprühen, Fallfilmauftrag, Spincoating und Schleudern.

Gegebenenfalls nach vorheriger Antrocknung bei Raumtemperatur wird eine Härtung des beschichteten Substrats durchgeführt. Vorzugsweise erfolgt die Härtung thermisch bei Temperaturen im Bereich von 50 bis 300°C, insbesondere 70 bis 200°C und besonders bevorzugt 90 bis 180°C, gegebenenfalls unter vermindertem Druck. Die Aushärtzeit sollte unter diesen Bedingungen weniger als 200 Minuten, bevorzugt weniger als 100 Minuten und noch bevorzugter weniger als 60 Minuten betragen. Die Schichtdicke der gehärteten Schicht sollte 0,5 bis 100 µm, bevorzugt 1 bis 20 µm und insbesondere 2 bis 10 µm betragen.

Im Falle der Anwesenheit ungesättigter Verbindungen und Photoinitiatoren kann die Härtung auch durch Bestrahlung erfolgen, an die sich gegebenenfalls eine thermische Nachhärtung anschließt.

Die Auswahl der Substratmaterialien zur Beschichtung ist nicht beschränkt. Vorzugsweise eignen sich die erfindungsgemäßen Zusammensetzungen zum Beschichten von Holz, Textilien, Papier, Steinwaren, Metallen, Glas, Keramik und Kunststoffen und dabei besonders zur Beschichtung von Thermoplasten, wie sie in Becker/Braun, Kunststofftaschenbuch, Carl Hanser Verlag, München, Wien 1992 beschrieben sind. Ganz besonders eignen sich die Zusammensetzungen zur Beschichtung von transparenten Thermoplasten und vorzugsweise von Polcarbonaten bzw. für die Beschichtung von Metallen oder metallisierten Oberflächen. Insbesondere Brillengläser, optische Linsen, Automobilscheiben und Thermoköpfe können mit den erfindungsgemäß erhaltenen Zusammensetzungen beschichtet werden.

Die folgenden Beispiele erläutern die vorliegende Erfindung weiter:

### Beispiele

### Beispiel 1

Zu 246,3 g (1,0 mol) Aluminium-tri-sec-butanolat wurden unter Rühren 354,5 g (3,0 mol) n-Butoxyethanol zugetropft, wobei die Temperatur auf ca. 45°C anstieg. Nach dem Abkühlen muß die Aluminatlösung verschlossen aufbewahrt werden.

1239 g 0,1N HCl wurden vorgelegt. Unter Rühren wurden 123,9 g (1,92 mol) Böhmit Disperal Sol P3® zugegeben. Danach wurde 1 h bei Raumtemperatur gerührt. Die Lösung wurde zur Abtrennung fester Verunreinigungen durch einen Tiefenfilter filtriert.

787,8 g (3,33 mol) GPTS (y-Glycidyloxypropyltrimethoxysilan)und 608,3 g TEOS (Tetraethoxysilan) (2,92 mol) wurden gemischt und während 10 Minuten gerührt. Zu dieser Mischung wurden 214,6 g des Böhmitsols innerhalb von ca. 2 Minuten zugegeben. Wenige Minuten nach der Zugabe erwärmte sich das Sol auf ca. 28 bis 30°C und war nach ca. 20 Minuten klar. Die Mischung wurde anschließend ca. 2 Stunden bei 35°C gerührt und dann auf ca. 0°C abgekühlt.

Bei 0°C ± 2°C wurden dann 600,8 g der wie vorstehend beschrieben hergestellten Al(OEtOBu)₃-Lösung in sec.-Butanol, enthaltend 1,0 mol Al(OEtOBu)₃ zugegeben. Nach Beendigung der Zugabe wurde noch 2 Stunden bei ca. 0°C gerührt und dann das restliche Böhmit-Sol ebenfalls bei 0°C ± 2°C zugegeben. Anschließend erfolgte das Aufwärmen der erhaltenen Reaktionsmischung auf Raumtemperatur ohne Temperierung in ca. 3 Stunden. Als Verlaufmittel wurde Byk 306® zugegeben. Die Mischung wurde filtriert und der erhaltene Lack bei +4°C gelagert.

Entsprechend diesem Verfahren wurden weitere Beipiele und Vergleichbeispiele durchgeführt, wobei die Mengen der Komponenten entsprechend den in Tabelle 1 angegebenen Werten geändert wurden.

Mit den erhaltenen Lacken wurden Teststücke wie folgt erhalten:
Platten aus Polycarbonat auf Basis Bisphenol A (Tg = 147°C, M_{w} 27500) mit den Maßen 105 x 150 x 4 mm wurden mit Isopropanol gereinigt und durch Tauchen in eine Mischung aus 3 Gew.-% Aminopropyltrimethoxysilan und 97 Gew.-% Butylglykol mit anschließender 0,5-stündiger Temperaturbehandlung bei 130°C geprimert. Anschließend wurden die Platten jeweils bei einer Tauchgeschwindigkeit V = 100 cm/min mit einer Lackschicht von 20 µm Dicke beschichtet. Nach 10 Minuten Abkühlen bei Raumtemperatur wurden die beschichteten Platten 1 h bei 130°C getrocknet. Die Schichtdicke der Lacke betrug nach Trocknung ca. 7 µm. Die beschichteten Platten wurden nach erfolgter Aushärtung 2 Tage bei Raumtemperatur gelagert und dann den folgenden definierten Prüfungen unterzogen.

Die Eigenschaften der mit diesen Lacken erhaltenen Überzüge wurden wie folgt bestimmt:
Gitterschnittprüfung: EN ISO 2409:1994
Gitterschnittprüfung nach Wasserlagerung: 65°C, tt = 0/1. Die lackierten Platten werden nach EN ISO 2409:1994 mit einem Gitterschnitt versehen und in 65°C heißem Wasser gelagert. Registriert wird die Lagerzeit (Tage), ab der der erste Haftungsverlust im Tape Test von 0 nach 1 auftritt.
Sandrieseltest: DIN 52 348
Taber-Abraser-Test: Verschleißprüfung DIN 52 347; (1000 Zyklen, CS10F, 500g)

Die Beurteilungsergebnisse sind in der folgenden Tabelle dargestellt:

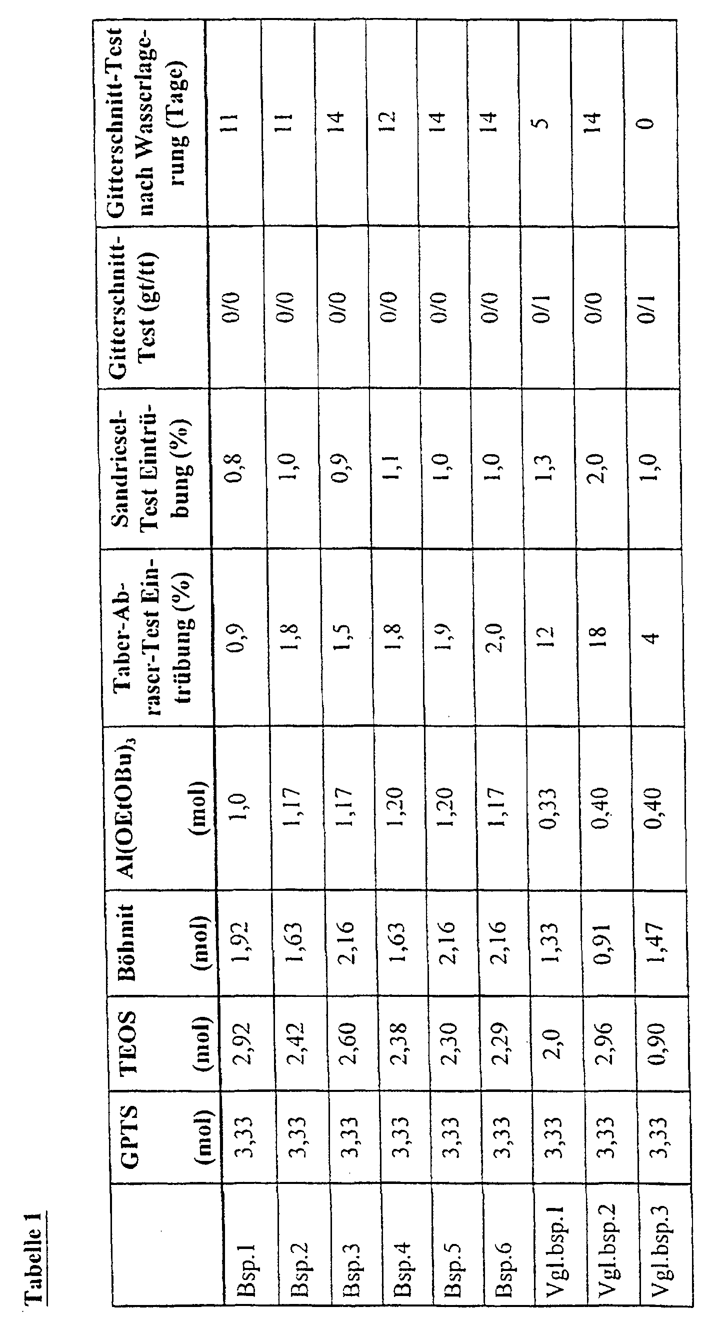

## Patentansprüche

1. Beschichtungszusammensetzung, umfassend mindestens eine Siliciumverbindung (A), die mindestens einen hydrolytisch nicht abspaltbaren, direkt an Si gebundenen Rest aufweist, der eine Epoxidgruppe enthält, ein teilchenförmiges Material (B), das ausgewählt wird aus Oxiden, Oxidhydraten, Nitriden und Carbiden von Si, Al und B sowie von Übergangsmetallen und eine Teilchengröße im Bereich von 1 bis 100 nm aufweist, eine Verbindung (C) von Si, Ti, Zr, B, Sn oder V und mindestens eine hydrolysierbare Verbindung (D) von Ti, Zr oder Al, **dadurch gekennzeichnet, daß** sie folgendes Verhältnis
1 mol Siliciumverbindung (A),
0,42-0,68 mol teilchenförmiges Material (B),
0,28-1,0 mol Verbindung (C)
und 0,23-0,68 mol Verbindung (D)
umfaßt.

2. Zusammensetzung nach Anspruch 1, **dadurch gekennzeichnet, dass** (A) eine Verbindung der allgemeinen Formel
R₃SiR'
ist, in welcher die Reste R gleich oder verschieden sind und für eine hydrolysierbare Gruppe stehen und R' einen Glycidyl- oder einen Glycidyloxy-(C₁₋₂₀)-alkylen-Rest darstellt,
(B) ein Oxid oder Oxidhydrat von Aluminium ist,
(C) eine Verbindung der allgemeinen Formel
SiR₄
ist, wobei die Reste R gleich oder verschieden sind und für eine hydrolysierbare Gruppe stehen und
(D) eine Verbindung der Formel
AIR₃
ist, wobei die Reste R gleich oder verschieden sind und für eine hydrolysierbare Gruppe stehen.

3. Zusammensetzung nach Anspruch 1 oder 2, wobei (A) γ-Glycidyloxypropyltrimethoxysilan ist, (B) ein Sol aus Böhmit mit einer Teilchengröße im Bereich von 1 bis 100 nm ist, (C) Tetraethoxysilan und (D) Al(butoxyethanolat)₃ ist.

4. Zusammensetzung nach einem der Ansprüche 1 bis 3, welche zusätzlich eine Lewis-Base (E) und/oder mindestens eine hydrolysierbare Siliciumverbindung (F), die mindestens einen nicht-hydrolysierbaren Rest aufweist, welcher 5 bis 30 Fluoratome direkt an Kohlenstoffatome gebunden aufweist, die durch mindestens 2 Atome vom Si getrennt sind, und/oder ein Tensid (G) und/oder ein aromatisches Polyol (H) mit einem durchschnittlichen Molekulargewicht von nicht mehr als 1000 umfaßt.

5. Zusammensetzung nach einem der Ansprüche 1 bis 4, dadurch erhältlich, daß ein Sol des teilchenförmigen Materials (B) mit einem pH im Bereich von 2,5 bis 3,5 mit einem Gemisch aus Siliciumverbindung (A) und Verbindung (C) sowie Verbindung (D) und gegebenenfalls den weiteren Komponenten (E) bis (H) umgesetzt wird.

6. Zusammensetzung nach Anspruch 5, dadurch erhältlich, daß Siliciumverbindung (A) und Verbindung (C) vorgemischt werden, dann
a) eine erste Teilportion von 10 bis 70 Gew.-% der Gesamtmenge des Sols von Material (B) mit einem pH von 2,5 bis 3,5 zugegeben wird, anschließend
b) die Verbindung (D) und wiederum anschließend
c) die zweite Teilportion des Sols von Material (B)
zugegeben wird.

7. Zusammensetzung nach Anspruch 6, **dadurch gekennzeichnet, daß** die Zugabe in Stufe a) bei einer Temperatur >25°C erfolgt und die Zugabe in Stufe b) und in Stufe c) bei 0 ± 2°C erfolgt.

8. Zusammensetzung nach den Ansprüchen 6 oder 7, wobei die Verbindung (A) unter Verwendung eines sauren Katalysators vorhydrolysiert wird.

9. Zusammensetzung nach Anspruch 6, 7 oder 8, wobei verdünnte Salzsäure zur Einstellung des pH verwendet wird.

10. Verwendung der Zusammensetzung nach einem oder mehreren der Ansprüche 1 bis 9 zum Beschichten von Substratmaterialien jeglicher Art

11. Verwendung nach Anspruch 10, **dadurch gekennzeichnet, dass** man eine ein inertes Lösungsmittel enthaltende Zusammensetzung auf die Substratoberfläche aufträgt und (a) thermisch härtet oder (b) nach vorheriger Zugabe eines Photoinitiators photochemisch härtet.

12. Mit einer nach einem oder mehreren der Ansprüche 1 bis 9 erhaltenen Zusammensetzung beschichtete Artikel.

## Claims

1. Coating composition comprising at least one silicon compound (A) which has at least one radical which is bonded directly to Si, is not able to be separated hydrolytically and contains an epoxy group, a particulate material (B) which is selected from among oxides, oxide hydrates, nitrides and carbides of Si, A1 and B and of transition metals and has a particle size within the range 1 to 100 nm, an Si, Ti, Zr, B, Sn or V compound (C) and at least one hydrolysable Ti, Zr or A1 compound (D), **characterised in that** it comprises the following ratio
1 mol of the silicon compound (A),
0.42 to 0.68 mol of the particulate material (B),
0.28 to 1.0 mol of the compound (C)
and 0.23 to 0.68 mol of the compound (D).

2. Composition according to Claim 1, **characterised in that** (A) is a compound of the general formula
R₃SiR'
in which the radicals R are the same or different and stand for a hydrolysable group, and R' represents a glycidyl- or glycidyloxy-(C₁₋₂₀)-alkylene radical,
(B) is an oxide or oxide hydrate of aluminium,
(C) is a compound of the general formula
SiR₄
wherein the radicals R are the same or different and stand for a hydrolysable group, and
(D) is a compound of the formula
AlR₃
wherein the radicals R are the same or different and stand for a hydrolysable group.

3. Composition according to Claim 1 or 2, wherein (A) is -glycidyloxypropyl trimethoxysilane, (B) is a sol prepared from boehmite having a particle size within the range 1 to 100 nm, (C) is tetraethoxysilane, and (D) is Al(butoxyethanolate)₃.

4. Composition according to one of Claims 1 to 3, which comprises additionally a Lewis base (E) and/or at least one hydrolysable silicon compound (F) having at least one non-hydrolysable radical which has 5 to 30 fluorine atoms bonded directly to carbon atoms which are separated from the Si by at least 2 atoms, and/or a surfactant (G) and/or an aromatic polyol (H) having an average molecular weight not exceeding 1000.

5. Composition according to one of Claims 1 to 4, which is obtainable by reacting a sol of the particulate material (B) having a pH within the range 2.5 to 3.5 with a mixture prepared from the silicon compound (A) and the compound (C), as well as the compound (D) and optionally the further components (E) to (H).

6. Composition according to Claim 5, which is obtainable by pre-mixing the silicon compound (A) and the compound (C), followed by the addition of
a) a first part portion of from 10 to 70 wt.% of the total quantity of the sol of the material (B) having a pH of 2.5 to 3.5, followed by
b) the compound (D), and followed in turn by the addition of
c) the second part portion of the sol of material (B).

7. Composition according to Claim 6, **characterised in that** the addition in stage a) takes place at a temperature exceeding 25°C, and the addition in stage b) and in stage c) takes place at 0 ± 2°C.

8. Composition according to Claims 6 or 7, wherein the compound (A) is pre-hydrolysed with the use of an acid catalyst.

9. Composition according to Claim 6, 7 or 8, wherein dilute hydrochloric acid is used to adjust the pH.

10. Use of the composition according to one or more of Claims 1 to 9 for coating substrate materials of any type.

11. Use according to Claim 10, **characterised in that** a composition containing an inert solvent is applied to the substrate surface and is (a) cured in thermal manner or is (b) cured in photochemical manner after the prior addition of a photoinitiator.

12. Articles which are coated with a composition obtained according to one or more of Claims 1 to 9.

## Revendications

1. Composition de revêtement, comprenant au moins un composé du silicium (A), qui présente au moins un reste non clivable par hydrolyse, lié directement au Si, qui contient un radical époxyde, un matériau particulaire (B), qui est choisi parmi les oxydes, oxhydrates, nitrures et carbures de Si, Al et B ainsi que des métaux de transition et qui présente une taille des particules située dans l'intervalle allant de 1 à 100 nm, un composé (C) du Si, Ti, Zr, B, Sn ou V et au moins un composé hydrolysable (D) du Ti, Zr ou Al, **caractérisée en ce que** le rapport suivant est respecté :
1 mole du composé du silicium (A) ;
0,42-0,68 mole du matériau particulaire (B) ;
0,28-1,0 mole du composé (C), et
0,23-0,68 mole du composé (D).

2. Composition suivant la revendication 1, **caractérisée en ce que** (A) est un composé de formule générale :
R₃SiR'
dans laquelle les restes R sont identiques ou différents et représentent un radical hydrolysable et R' représente un reste glycidyl- ou glycidyloxy(alcoylène en C₁₋₂₀) ;
(B) est un oxyde ou oxhydrate d'aluminium
(C) est un composé de formule générale :
SiR₄
dans laquelle les restes R sont identiques ou différents et représentent un radical hydrolysable, et
(D) est un composé de formule
AlR₃
dans laquelle les restes R sont identiques ou différents et représentent un radical hydrolysable.

3. Composition suivant la revendication 1 ou 2, où (A) est le γ-glycidyloxypropyltriméthoxysilane, (B) est un sol de boémite avec une taille des particules située dans l'intervalle allant de 1 à 100 nm, (C) est le tétraéthoxysilane et (D) est le Al (butoxyéthanolate)₃.

4. Composition suivant l'une des revendications 1 à 3, qui comprend en outre, une base de Lewis (E) et/ou au moins un composé du silicium hydrolysable (F), qui présente au moins un reste non hydrolysable, lequel présente 5 à 30 atomes de fluor liés directement sur des atomes de carbone, qui sont séparés par au moins deux atomes du Si, et/ou un tensioactif (G) et/ou un polyol aromatique (H) avec un poids moléculaire moyen non supérieur à 1000.

5. Composition suivant l'une des revendications 1 à 4, obtenue en ce que l'on fait réagir un sol du matériau particulaire (B) avec un pH situé dans l'intervalle allant de 2,5 à 3,5, avec un mélange du composé du silicium (A) et du composé (C), ainsi que le composé (D) et le cas échéant, les autres composants (E) à (H).

6. Composition suivant la revendication 5, obtenue en ce que l'on prémélange le composé du silicium (A) et le composé (C), et
a) on ajoute une première fraction de 10 à 70% en poids de la quantité totale du sol du matériau (B) avec un pH allant de 2,5 à 3,5, ensuite
b) on ajoute le composé (D) et à nouveau
c) la deuxième fraction du sol du matériau (B).

7. Composition suivant la revendication 6, **caractérisée en ce que** l'addition de l'étape a) est effectuée à une température > 25°C et l'addition de l'étape b) et de l'étape c), à une température de 0 ± 2°C.

8. Composition suivant les revendications 6 ou 7, où le composé (A) est préhydrolysé en utilisant un catalyseur acide.

9. Composition suivant les revendications 6, 7 ou 8, où on utilise de l'acide chlorhydrique dilué pour ajuster le pH.

10. Utilisation de la composition suivant l'une ou plusieurs des revendications 1 à 9, pour le revêtement de matériaux de substrat de tout type.

11. Utilisation suivant la revendication 10, **caractérisée en ce que** l'on applique une composition contenant un solvant inerte sur la surface du substrat et (a) on la durcit thermiquement ou (b) on la durcit photochimiquement après addition préalable d'un photoinitiateur.

12. Article revêtu avec une composition suivant l'une ou plusieurs des revendications 1 à 9.
